(19) **Europäisches Patentamt**
**European Patent Office**
**Office européen des brevets**

(11) **EP 1 452 637 A1**

(12) **EUROPEAN PATENT APPLICATION**

(43) Date of publication:
 **01.09.2004 Bulletin 2004/36**

(51) Int Cl.[7]: **D06M 11/44**, D06M 11/45,
 D06M 11/46, D06M 11/49,
 D06M 11/79

(21) Application number: **03003675.0**

(22) Date of filing: **18.02.2003**

(84) Designated Contracting States:
 **AT BE BG CH CY CZ DE DK EE ES FI FR GB GR
 HU IE IT LI LU MC NL PT SE SI SK TR**
 Designated Extension States:
 **AL LT LV MK RO**

(71) Applicant: **Seita, Daisuke
 Kurashiki-city, Okayama-prefecture (JP)**

(72) Inventor: **Seita, Daisuke
 Kurashiki-city, Okayama-prefecture (JP)**

(74) Representative: **Müller - Hoffmann & Partner
 Patentanwälte,
 Innere Wiener Strasse 17
 81667 München (DE)**

(54) **Functional plant fiber, a water-improving material, and a soil-protective material**

(57) This invention provides functional plant fiber which has various surface shapes permitting a large amount of various microorganisms in running water to be carried under an environment where they can easily live, and is also suitable for scavenging a source of nutrition enrichment such as nitrogen and phosphorus, as well as a water-improving material using the same.

This invention is constituted in such that functional fine particles having desired working effects are carried on gaps possessed by the plant fiber.

F I G. 1

**Description**

BACKGROUND OF THE INVENTION

1. Field of the Invention

The present invention relates to functional plant fiber and a water-improving material suitable for improving water in an open water system such as rivers, lakes and marshes, as well as a soil-protective material for protecting soil in flat ground or in slant ground (face of slope), planting soil for planting structures such as roofs, rooftops etc., or soil in face of slope in the waterside of rivers (and the waterside of lakes and marshes).

2. Description of the Prior Art

(1) For improving water in an open water system such as rivers, lakes and marshes, gravel or sand is spread in running water in an open watercourse or nonwoven fabrics of polyester etc. are hung in running water so that microorganisms effective for improvement of water are carried on such gravel and sand or on the nonwoven fabrics, and by the action of the microorganisms, BOD and COD in running water are removed or decreased.

(2) In the field of protection and planting the face of slope, on the other hand, corrosive organic fibers which do not remain as residues with time attract attention, and such corrosive organic fibers are used as a material to be formed into a net or sheet as a soil-protective material, and the soil-protective material is utilized in such various ways that ① a vegetation base material (i.e. a material having plant seeds incorporated into organic compost or chemical fertilizer or into a soil-improving material) sprayed on the face of slope is covered with said soil-protective material, ② said soil-protective material is laid on the face of slope and then sprayed with a vegetation base material, ③ said soil-protective material having seeds etc. adhering thereto directly or via sheet is laid on the face of slope, or ④ a vegetation growth base sprayed on the face of slope is covered with said soil-protective material having seeds etc. adhering thereto, and by using said protective material, the erosion of surface-layer solid on the face of slope can be effectively prevented, planting by the plant seeds incorporated into the vegetation base material or by flying seeds can be preferably achieved, and the organic fibers in said protective material are biodegradable with time and thus preferable in that they do not remain as residues.

However, the water-improving material for carrying microorganisms as described in (1) above have a smooth surface to which the microorganisms hardly adhere, and the nonwoven fabrics as the water-improving material have only predetermined pores and therefore function merely as carriers for a part of various microorganisms in running water, thus failing to sufficiently demonstrate the water-improving ability by utilizing effective microorganisms in running water.

Further, the conventional water-improving material is poor in the ability to scavenge nitrogen and phosphorus as a source of eutrophication in running water, and hardly expectable to exhibit sufficient improvement of water.

In addition, the conventional techniques for protecting and planting the face of slope described in (2) above merely utilize the attribute of biodegradable corrosive organic fibers by which they do not remain as residues, and there is no other special functions besides said attribute.

This invention was made in view of such circumstances, and its object is to provide functional plant fiber which has various surface shapes permitting a large amount of various microorganisms in running water to be carried under an environment where they can easily live, and is also suitable for scavenging a source of nutrition enrichment such as nitrogen and phosphorus, as well as a water-improving material using the same.

Another object of this invention is to provide a soil-protecting material having excellent functions besides corrosion in covering a vegetation base material sprayed on the face of slope.

SUMMARY OF THE INVENTION

To solve the problem described above, this invention provides functional plant fiber wherein functional fine particles having desired working effects are carried on gaps possessed by the plant fiber.

The plant fiber in this invention has a large number of fine gaps and has very complex shapes, and is thus excellent in affinity for microorganisms.

That is, by carrying functional fine particles on gaps possessed by the plant fiber thin layer of the functional fine particles is formed in a porous state, and further the functional fine particles not only form warped concave and convex portions having various sizes, but also intertwine complicatedly with one another to spread out in a branched form, thus permitting the surface of the plant fiber to have various shapes.

That is, by carrying the functional fine particles on gaps possessed by the plant fiber habitat environment suitable for microorganisms is formed on the surface of the plant fiber.

Further, when fine particles neutralizing acidity are used as the functional fine particles, acidic substances such as in acid rain and in soil are neutralized efficiently by the plant fiber, so the acidity of e.g. soil on the face of slope can be efficiently corrected. That is, acid rain is rain with pH 5.6 or less, and it is confirmed that acid rain with at least about pH 4.5 falls usually. This acid rain is one cause of exerting an adverse effect on the ecosystem in the earth. Accordingly, functional plant fiber comprising e.g. Ca carried thereon as functional fine particles is formed into a net, and by laying the net on the face of slope, acid rain falling thereon can be neutralized to reduce said adverse effect.

From a different viewpoint, this invention provides a water-improving material composed partly or wholly of plant fiber having the function of attracting useful microorganisms, wherein at least one member selected from natural or synthetic oxides, hydroxides, carbonates, composite oxides and composite carbonates thereof and organometallic compounds thereof, and based on either one or more of Ca, Mg, Al, Fe, Si and Ti as the main component, is carried on gaps possessed by the plant fiber.

The material (natural or synthetic oxides, hydroxides, carbonates, composite oxides and composite carbonates thereof and organometallic compounds thereof, and based on either one or more of Ca, Mg, Al, Fe, Si and Ti as the main component) to be carried on gaps possessed by the plant fiber has the effect of attracting useful microorganisms, and these microorganisms can be expected to improve water, thus achieving a high effect of improving and maintaining the environments of rivers, lakes and marshes.

That is, since the surface of the plant fiber has various shapes to permit the water-improving material to have a vast contact area with running water, the water-improving material has the function of carrying a large amount of various microorganisms necessary for water cleaning, thus bringing about a significantly higher ability to improve water by using useful microorganisms compared with the conventional material, and it is also made superior in adsorption of SS (suspended substance).

Further, a habitat space for various animals and plants can be formed in the water-improving material.

From still another viewpoint, this invention provides a soil-protective material composed partly or wholly of plant fiber having the function of neutralizing acidity, wherein at least one member selected from natural or synthetic oxides, hydroxides, carbonates, composite oxides and composite carbonates thereof and organometallic compounds thereof, and based on either one or more of Ca, Mg, Al, Fe, Si and Ti as the main component, is carried on gaps possessed by the plant fiber.

For example, the soil-protective material is spread on the face of slope thereby preventing erosion of surface-layer soil of the face of slope. In this case, the soil-protective material would be utilized in such various ways that ① a vegetation base material (i.e. a material having plant seeds incorporated into organic compost or chemical fertilizer or into a soil-improving material) is covered with said soil-protective material, ② said soil-protective material is laid on the face of slope and then sprayed with a vegetation base material, ③ said soil-protective material having seeds etc. adhering thereto directly or via sheet is laid on the face of slope, or ④ a vegetation growth base sprayed on the face of slope is covered with said soil-protective material having seeds etc. adhering thereto. In the soil-protective material, the layer carried on gaps possessed by the plant fiber has a vast surface area so that acidic substances in acid rain and in soil can be efficiently contacted therewith and neutralized thereby efficiently correcting the acidity of soil on the face of slope.

By correcting the acidity of soil, the soil-protective material of the present invention is capable of not only forming excellent vegetation even on the face of slope which has been inferior in growth of plants, but also contributing to neutralization of acid rain as a recent issue, thus creating a soil environment suitable for growth of plants and securing protection and planting the face of slope by vegetation.

As the oxides in this invention, e.g. $CaO$, $MgO$, $FeO$, $Fe_2O_3$, $Fe_3O_4$, $Al_2O_3$, $SiO_2$, $TiO_2$ etc. are selected.

As the hydroxides in this invention, $Ca(OH)_2$, $Mg(OH)_2$, $Fe(OH)_2$, $Al(OH)_2$ etc. are selected.

As the carbonates in this invention, $CaCO_3$, $MgCO_3$ etc. are selected.

As the composite oxides in this invention, $MgSiO_4$, $Ca_2SiO_4$, $CaTiO_3$, $Al_2O_3$ etc. are selected.

As the composite carbonates in this invention, e.g. $CaMg(CO_3)_2$ etc. are selected.

As the organometallic compounds in this invention, trialkoxy aluminum, tetraalkoxy silane, tetraethoxy silane, tetraalkoxy titanium etc. are selected.

In this invention, when a material based on e.g. Ca, Mg, Al or Fe is carried on gaps possessed by said plant fiber, the concentration of phosphorus in running water can be lowered.

That is, in the case where e.g. $Ca(OH)_2$ (slaked lime) is selected, $Ca(OH)_2$ is reacted with $H_3PO_4$ (phosphoric acid) in the running water, as shown in the following reaction (1), whereby $H_3PO_4$ is captured as $Ca_3(PO_4)_2$ (calcium phosphate) on gaps possessed by the plant fiber thereby lowering the concentration of phosphorus in running water.

$$3Ca(OH)_2 + 2H_3PO_4 \rightarrow Ca_3(PO_4)_2 + 6H_2O \qquad (1)$$

That is, by introduction of $Ca(OH)_2$, the affinity between the plant fiber and microorganisms in water is enhanced, and by the action of the microorganisms, eutrophicaton materials in water such as nitrogen, phosphorus, COD etc. are digested, while $Ca(OH)_2$ itself also reacts with phosphorus in water, thus demonstrating the effect of removing phosphorus, and therefore, the improvement of water can also be expected and the effect of improvement and maintenance of environments in rivers, lakes and marshes is raised.

Other materials based on Ca, Mg, Al or Fe can also be used to scavenge phosphoric acid.

In the present invention, when e.g. $SiO_2$ is carried on gaps possessed by said plant fiber, Si-OH group is introduced into the gaps thereby improving the interaction with microorganisms and improving the hydrophilicity of the water-improving material.

Further, when e.g. ethyl silicate is carried on gaps possessed by said plant fiber, hydrophilic Si-OH group is introduced into gaps thereby advantageously bringing about the effect of improving the hydrophilicity of the water-improving material.

BRIEF DESCRIPTION OF THE DRAWINGS

Fig. 1 is an enlarged illustration of a microphotograph of the surface of plant fiber constituting the water-improving material in one embodiment of the present invention.

Fig. 2 is a partial perspective view of the water-improving material in another embodiment of the present invention.

Fig. 3 is a drawing showing the improvement of water by the water-improving materials suspended at intervals in the direction of running water in an open watercourse.

Fig. 4 is a drawing showing the improvement of water by the water-improving materials arranged at intervals in the direction of depth of a watercourse.

Fig. 5 is a partial perspective view of the bar-shaped water-improving material in still another embodiment.

Fig. 6 is a drawing showing the improvement of water by the bar-shaped water-improving materials arranged in the bottom of a watercourse.

Fig. 7 is a drawing showing the practice for protecting soil in the face of slope.

Fig. 8 is a drawing showing the practice for protecting soil on the face of slope by spraying a base material.

Fig. 9 is a drawing showing the practice for protecting and planting soil on the face of slope in the waterside of river or the like.

Fig. 10 is a sectional view of the soil-protective material in another embodiment wherein plant fiber is attached to the surface of the bar-shaped soil-protective material so as to drift in water.

DETAILED DESCRIPTION OF THE PREFERRED EMBODIMENTS

Hereinafter, the embodiments of the present invention are described by reference to the drawings.

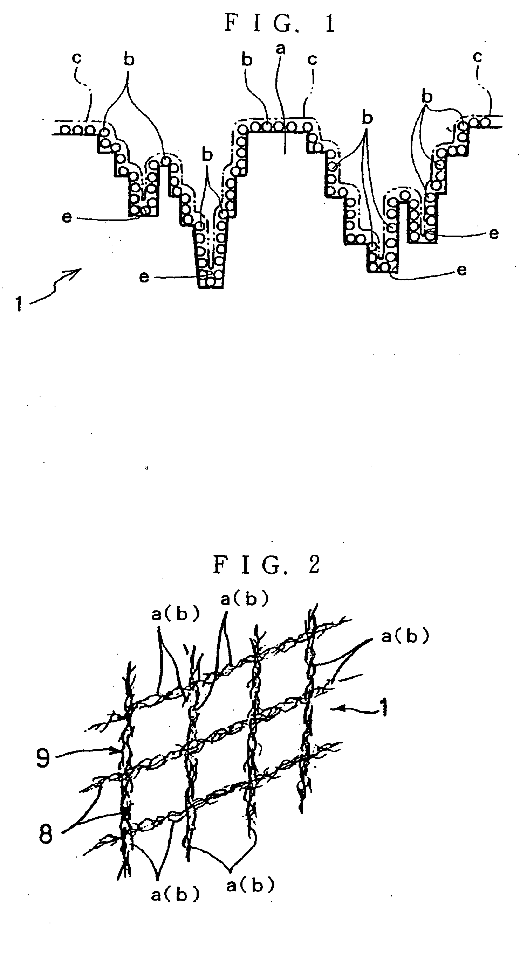

Fig. 1 is an illustration of a microphotograph of the surface of plant fiber to illustrate the plant fiber (such as coconut fiber) "a" constituting the water-improving material suspended in running water. For example, powder "b" of calcium or calcium-based compound is carried as the inorganic powder "b" on the surface of the plant fiber "a".

In Fig. 1, the surface of the plant fiber "a" has a large number of warped, striped concave grooves of complex shape (not shown), hollows "e" of complex shapes and various sizes, and continuous hollow gaps of various sizes (not shown), and the powder "b" of calcium or calcium-based compound is further carried (introduced) on the complicatedly shaped surface of the plant fiber so that a thin layer of the powder "b" of calcium or calcium-based compound can be formed in a larger amount on the surface of the plant fiber than by simple adhesion or adsorption.

That is, when calcium is introduced onto the surface of the plant fiber, $Ca^{2+}$ (calcium ion) reacts with cellulose or lignin on the surface of the plant fiber so that calcium is bound chemically to the plant fiber "a", and $Ca^{2-}$ is very fine particles with a large surface area and is thus superior in reactivity with the aforesaid cellulose and lignin. Further, calcium is introduced onto the surface of the plant fiber in a larger amount than by simple adhesion or adsorption and is thus superior in duration of the effect.

In this invention, the gaps possessed by the plant fiber "a" refer not only to the aforementioned hollows "e" but also to the aforementioned concave grooves or hollow continuous gaps.

Further, the powders "b" of calcium or calcium-based compound not only form warped concave and convex portions having various shapes and sizes, but also intertwine complicatedly with one another to spread out in a branched form, thus permitting the surface of the plant fiber "a" to have various shapes to provide a habitat environment suitable for microorganisms.

The surface of the plant fiber "a", upon carbonization to such an extent that its shape is not significantly deteriorated, has a surface structure of more complex shape, and upon such carbonization, the affinity of the plant fiber "a" for microorganisms is advantageously increased to provide a more complex habitat environment for microorganisms.

As shown in Fig. 1, because a coupling agent "c" is further bound to the powder "b" of calcium or calcium-based compound carried on the surface of the plant fiber "a", to introduce organic functional groups onto the surface of the plant fiber "a", and further because organic functional groups suitable for habitat for microorganisms can be easily selected, the surface of the plant fiber "a" is in such a state as to easily gather microorganisms, whereby a more suitable habitat environment for microorganisms is formed on the surface of the fiber.

Such diversification of the surface shape results in a very large contact area between the water-improving material 1 and running water, and simultaneously the plant fiber "a" is plant-derived and has high affinity for microorganisms, so that a large number of various effective microorganisms necessary for water improvement are carried under a suitable habitat environment on the water-improving material 1, and therefore, the ability of the various microorganisms to remove BOD and COD from running water becomes significantly higher than conventional, and simultaneously the ability of the material to adsorb SS (suspended substance) also becomes superior.

On the other hand, the powder "b" of calcium or calcium-based compound carried on the surface of the plant fiber "a" or on the gaps possessed by the plant fiber "a" can scavenge phosphoric acid and nitrogen in running water, to reduce the concentration of phosphorus and nitrogen. For disposal of the water-improving material 1 after use, the water-improving material 1 composed of plant plant fiber "a" occurring in the natural world is combustible without causing pollution or may be left as it is because the plant fiber "a" is biodegraded with time for 4 to 6 years to diminish naturally in that site without causing pollution.

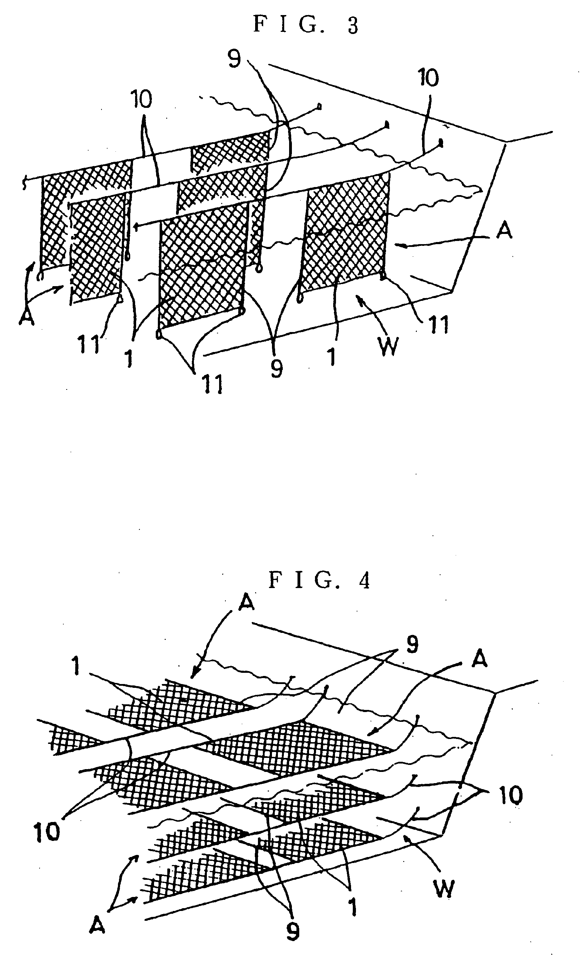

Fig. 2 shows the water-improving material 1 in another embodiment wherein a plurality of plant fibers "a" whose surface was modified by carrying the powder "b" of calcium or calcium-based compound on the surface of the plant fiber "a" or on gaps possessed by the plant fiber "a" in the water-improving material 1, or by carbonizing the surface of the plant fiber "a", or by binding a coupling agent to the powder "b" of calcium-based compound are bundled to form a string-shaped material 8, and the string-shaped material 8 is formed into a net-shaped material 9 having rough mesh (about 3 to 5 cm). For improvement of water in an open water system, for example as shown in Fig. 3, a plurality of carrier units A each consisting of a plurality of net-shaped materials 9 connected in one side by anchor rope 10 and simultaneously provided with suspending weight 11 at both corners of the other side are suspended at intervals in the direction of running water in an open watercourse W such that the water-improving material 1 obstructs running water.

Alternatively, as shown in Fig. 4, a plurality of carrier units A each consisting of a plurality of net-shaped materials 9 connected by anchor ropes 10 in one side and in the other side respectively may be arranged at intervals in the direction of depth of the open watercourse W such that the water-improving material 1 is positioned along running water.

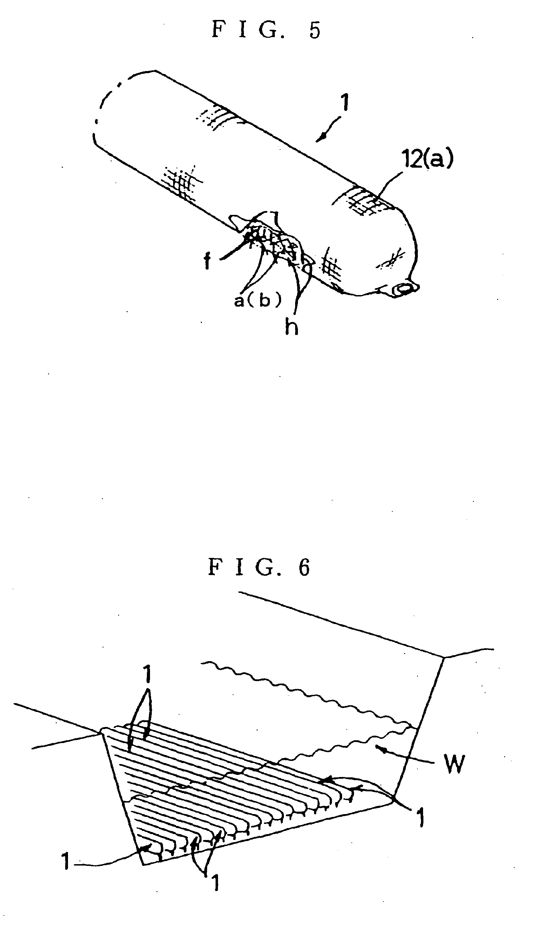

Fig. 5 shows the water-improving material 1 in still another embodiment, and in this embodiment, ground coconut shell material "f" of about 1 to 3 cm in size, plant fiber "a" derived from coconut shells, and cut material "h" obtained by cutting plant fiber "a" into 2 to 5 cm pieces, at least one of which was surface-modified, are suitably accommodated in a reticulate bag 12 made of plant fiber whose surface was also modified, whereby the water-improving material 1 is formed into a thin long bar.

The reticulate bag 12 may be shortened, formed into a sphere, or formed to be flat like a floor cushion.

For cleaning water in an open water system, for example as shown in Fig. 6, the water-improving material 1 is arranged in water to spread over the bottom of the open watercourse W, or a plurality of water-improving materials 1 may be piled up or mutually connected to drift in water (not shown in the drawings), and in any cases, an anchor, a anchor rope or the like should be arranged (not shown) in order to keep the water-improving material 1 at a predetermined position.

In the various embodiments described above, for cleaning water in an open water system, the open watercourse W is branched from rivers, lakes and marshes to improve water, but the water-improving material 1 can also be arranged directly in an open water system such as rivers, lakes and marshes to improve water.

As the powder "b" of calcium or calcium-based compound for use in modification of the surface of the plant fiber, oxides and hydroxides other than organometallic compounds have an average particle diameter of preferably 10 nm to 10 µm. Such powder "b" of calcium or calcium-based compound is dispersed in water or an organic solvent, and then the plant fiber "a" is dipped therein and left for a predetermined time at face of slope pressures or under reduced pressure, followed by drying.

When organometallic compounds are used as the functional fine particles, the plant fiber "a" after drying is left in air or steam so that hydrolysis proceeds to modify the surface, and the organometallic compounds thus hydrolyzed occur in the form of $SiO_2$, $Al_2O_3$ and $TiO_2$ on the surface of the plant fiber "a" or on gaps possessed by the plant fiber "a".

Charging of the powder "b" of calcium or calcium-based compound onto the surface of the plant fiber "a" or into gaps possessed by the plant fiber "a" is described in more detail by reference to an example where $Ca(OH)_2$ is used on the plant fiber "a". 250 ml supersaturated (0.16%) $Ca(OH)_2$ solution was prepared, and 10 g plant fiber "a" was dipped therein for 3 hours. As a result, there was obtained surface modified water-improving plant fiber wherein the powder "b" of calcium or calcium-based compound in an amount of 2 to 4 weight % of the plant fiber could be charged onto the surface of the plant fiber "a" or into gaps possessed by the plant fiber "a".

Now, a water improvement test using this plant fiber having powder "b" of calcium or calcium-based compound introduced into it is described along with the results of the test.

For improvement of water, active sludge in a sewage disposal plant was collected and diluted to adjust SS (active sludge solids content) to 200 mg/l. Separately, the above surface-modified water-improving plant fiber was cut into pieces of 50 mm in length, and 0.5 g of these pieces was placed in a 300 ml beaker. Then, 200 ml of the diluted sludge was added thereto, and the beaker was shaken by a bio-shaker for 1 week during which artificial waste water was daily added.

The measurement results of the pH value of the treated water and the degrees of removal of COD, phosphorus and nitrogen in this test are shown in Table 1.

[Table 1]

As is evident from Table 1, the comparison between the plant fiber surface-modified by carrying the powder "b" of calcium and calcium-based compound and the plant fiber not subjected to surface modification indicates that the degrees of removal from the water treated with the former is higher by 20% for COD, 2-fold for phosphorus and 15% for nitrogen respectively than those by the latter.

Hence, the ability of the present invention to improve water was evaluated to be very high.

Hereinafter, another water improvement test is described along with the results of the test.

[Example of surface modification and evaluation of water improvement]

Coir with a length of 100 to 200 mm and a diameter of 0.1 to 1 mm was dipped in 5% suspension of $Ca(OH)_2$ with an average particle diameter of $3\mu m$, then left under reduced pressure (about 400 hPa) for 24 hours, and dried at 110°C for 24 hours.

Besides, 5% suspensions of $SiO_2$ and $CaMg(CO_3)_2$ were used respectively for the plant fiber "a" to modify the surface of the plant fiber under the same conditions as above. Separately, tetraethoxy silane was also used for the plant fiber "a", and the plant fiber was dried under the same conditions as above and left in the air for 72 hours so that hydrolysis proceeded for surface modification.

After surface modification, three coupling agents, that is, isopropyl-tri(n-aminoethyl-aminoethyl) titanate, N-phenyl-γ-aminopropyltrimethoxy silane and N-β (aminoethyl)-γ-aminopropyltrimethoxy silane, were bound thereto to introduce organic functional groups into the inorganic powder on the fibers.

Surface modification was also performed by spraying the plant fiber with 5% suspension of $SiO_2$.

For the test of water improvement by these fibers, active sludge in a sewage disposal plant was collected and diluted to adjust SS (active sludge solids content) to 2000 mg/l. Separately, the above surface-modified plant fiber was cut into pieces of 50 mm in length, and 0.5 g of these pieces was placed in a 300 ml beaker. Then, 200 ml of the diluted sludge was added thereto, and the beaker was shaken by a bio-shaker for 1 week during which artificial waste water was daily added.

The measurement results of the amount of deposit on the fibers, the pH value, and COD, concentrations of phosphorus and nitrogen in each supernatant in this test are shown in Table 2.

[Table 2]

Except for spraying the coconut fibers with $SiO_2$, dipping was performed for carrying the inorganic powder. As is evident from Table 2, the amount of deposit was increased from 2- to 4-fold and the concentrations of phosphorus and nitrogen were made as significantly low as about 2/3 to 1/5 by the plant fiber carrying the inorganic powder "b" and the plant fiber subjected to coupling treatment, as compared with the plant fiber not subjected to surface modification, and thus the ability of the water improving materials of the present invention can be evaluated to be very high.

The coupling agent used in this invention is selected for example from silane-type agents such as N-phenyl-γ-aminopropyltrimethoxy silane and N-β (aminoethyl)-γ-aminopropyltrimethoxy silane, titanate-type agents such as isopropyl-tri(n-aminoethyl-aminoethyl) titanate, and aluminum-type and phosphonate-type agents. These coupling agents bind to the inorganic powder carried on the surface of the plant fiber to introduce organic functional groups onto the surface of the plant fiber, and depending on the selection of the coupling agent, a wide variety of organic functional groups can be introduced onto the surface of the plant fiber.

That is, the organic functional groups include vinyl group, glycidoxy group, amino group, carboxyl group, mercapto group, alkyl group, ester group etc., from which a functional group suitable for microbial habitats can be easily selected, but any coupling agent can be used to create a state where microorganisms gather easily on the surface of the plant fiber, that is, a state for biological affinity, and by introducing a wide variety of organic functional groups onto the surface of the plant fiber, the ability of microorganisms to improve water can be significantly improved.

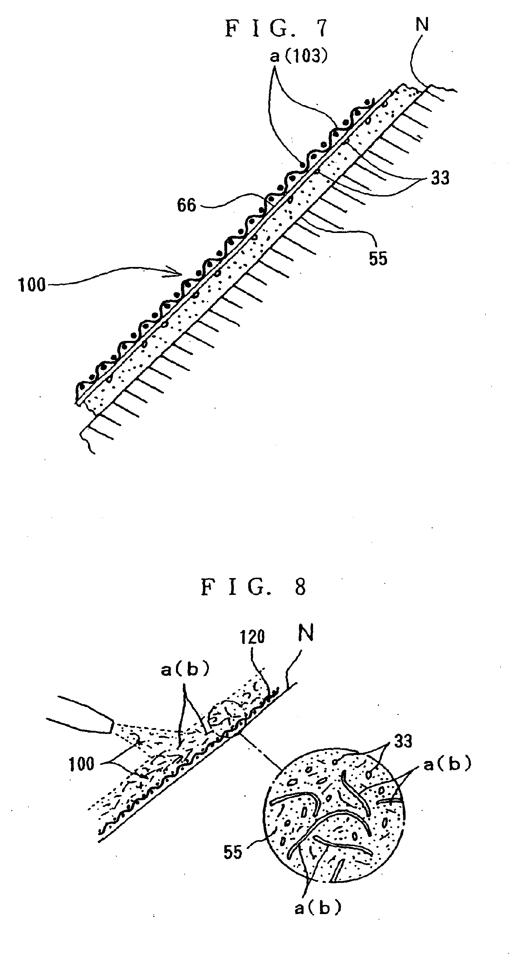

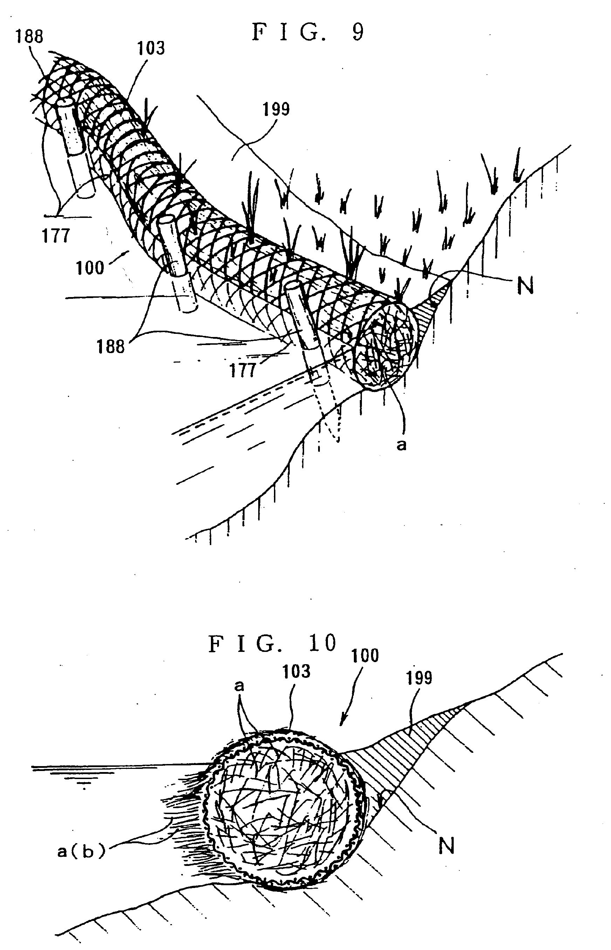

Figs. 7 and 8 show the soil-protective material of this invention. Hereinafter, embodiments of this soil-protective material are described.

Fig. 7 shows the practice of protection and planting of the face of slope N, and the soil-protective material 100 used in this practice constitutes the net-or sheet-shaped material 103 made of the plant fiber "a" shown in the respective embodiments described above, and as shown in Fig. 8, the soil-protective material 100 was made by introducing the inorganic powder "b" shown in the respective embodiments into the material 103.

The plant fiber "a" (with a length of about 100 to 200 mm and a diameter of about 0.1 to 1 mm) shown in the illustrated microphotograph in Fig. 1 is particularly preferable because of the presence of a very large number of hollows "e", and in this embodiment, the plant fiber "a" is woven to constitute the net-shaped material 103.

The soil-protective material 100 was made by dipping the net-shaped material 103 in a dispersion of the inorganic powder "b" in a liquid such as water or by spraying the net-shaped material 103 with the suspension to introduce the inorganic powder "b" by these charging or adhesion means into gaps in the plant fiber and onto the plant fiber surface having hollows "e", followed by drying thereof.

In place of the net-shaped material 103 made of the string-shaped material, the sheet-shaped material 103 may be made by weaving the string-shaped material, or the sheet-shaped material 103 may be constituted in the form of nonwoven mat by laminating a plurality of plant fibers "a" and bonding them via a water-soluble adhesive or in a needle punching system and further sewing the string-shaped material so as to have rough mesh.

Further, the soil-protective material 100 is made by forming the net- or sheet-shaped material 103 from the plant fiber "a" and then introducing the inorganic powder "b" into the material 103, but the soil-protective material 100 may also be made in the form of net or sheet by using the plant fiber "a" having the inorganic powder "b" introduced by the charging or adhesion means onto the plant fiber surface having hollows "e".

For practicing the protection and planting of the face of slope N by the soil-protective material 100 composed of the plant fiber "a" described above, if buried or flying seeds in the intended site, that is, seeds familiar to the ecosystem in that site, are utilized for planting of the face of slope N, the soil-protective material 100 may be arranged as it is on the face of slope N. For rapid planting of the face of slope N, seeds of plants preferably native to that site species are sown on the face of slope N, or a vegetation base material having plant seeds compounded with at least one of organic compost, a chemical fertilizer, plant fibers, a water retainer and/or a soil improver is sprayed onto the face of slope N, and thereafter the above soil-protective material 100 may spread over the face of slope N.

Alternatively, as shown in Fig. 7, the vegetation base material 55 having plant seeds 33 compounded with at least one of organic compost, a chemical fertilizer, plant fibers, a water retainer and/or a soil improver is maintained on a thin cotton mat or thin paper or the water-soluble sheet material 66 on which the plants seeds 33 can germinate and grow, and the sheet material 66 is stuck on the back of the soil-protective material 100. Although not shown in the drawings, the vegetation base material 55 may be maintained directly on the soil-protective material 100 by a water-soluble glue such as polyvinyl alcohol, or a turf material having the vegetation base material 55 sandwiched between water-soluble sheets may be stuck on the back of the soil-protective material 100, and the resulting soil-protective material 100 can be arranged on the face of slope N.

After the net- or sheet-shaped soil-protective material 100 thus constituted is arranged on the face of slope N, erosion of surface-layer soil on the face of slope can be prevented efficiently by the soil-protective material 100, while planting by plant seeds 33 compounded in the vegetation base material 55 or by flying seeds can be suitably achieved, and in addition, the plant fiber "a" in the soil-protective material 100 is biodegraded with time so that the soil-protective material 100 will not remain as residues on the face of slope, and further the inorganic powder "b" is not a substance exerting a burden on the environment, thus permitting the natural environment to be kept well.

In addition, the inorganic powder "b" introduced onto the soil-protective material 100 forms a layer of the inorganic fine powder with a vast surface area on the surface of the plant fiber so that acidic substances in the soil can be efficiently contacted therewith and neutralized thereby efficiently correcting the acidity of soil on the face of slope. Accordingly, the soil-protective material 100 is capable not only of forming excellent vegetation even on the face of slope inferior in growth of plants, but also of contributing to neutralization of acidic substances, that is, neutralization of acid rain.

Further, the inorganic powder "b" attracts useful microorganisms in the soil, and by these microorganisms, the soil is improved to promote plant growth, and by the soil-protective material 100 of the present invention, a soil environment suitable for plant growth can be created as a whole, thus suitably achieving protection and planting of the face of slope N by vegetation.

The sheet-shaped material 103 made of the plant fiber "a" was formed into a nonwoven mat, and the material 103 in the form of a mat (500 g/m$^2$) was dipped in milk of lime for 2 to 5 hours, then raised and dried to give the soil-protective material 100 having about 100 g Ca(OH)$_2$ adhering thereto. Two weeks after the resulting soil-protective material 100 was arranged on the face of slope N of acidic soil (pH 4.5), the surface-layer soil in the face of slope was confirmed to be neutralized to pH 5.5 to 6.0 at which vegetation is feasible.

Accordingly, the soil-protective material 100 onto which the sheet material 66 carrying the vegetation base material 55 had been stuck was arranged on the face of slope N of acidic soil, or the soil-protective material 100 was arranged on the face of slope N of acidic soil previously sprayed with the vegetation base material compounded with plant seeds, whereby the acidity of the soil in the face of slope was corrected, indicating that good plant growth can be expected even on the face of slope N of acidic soil.

Fig. 8 shows the practice for protection and planting of the face of slope N by spraying the soil-protective material 100, and the soil-protective material 100 used in this practice is formed by introducing the inorganic powder "b" into the plant fiber "a" and converting it into powder or cut pieces, or converting the plant fiber "a" into powder or cut pieces and introducing the inorganic powder "b" thereinto, followed by mixing the above powdered or cut plant fiber "a" with a vegetation base material 55 comprising plant seeds 33 compounded with at least one of organic compost, a chemical fertilizer, plant fibers, a water retainer and a soil improver.

The plant fiber "a" will not remain as residues on the face of slope N, while the inorganic powder "b" is not a material exerting a burden on the environment, and therefore the natural environment can be kept well, and furthermore, an effective correction of acidic soil and the improvement of soil by propagation of microorganisms can be achieved, and by spraying the soil-protective material 100, a soil environment suitable for growth of plants can be created at an early stage thereby suitably achieving the protection and planting of the face of slope N by vegetation.

After the above-constituted soil-protective material 100 is sprayed on the face of slope N, this soil-protective material 100 may be further covered for planting with another net- or sheet-shaped soil-protective material 100 described above.

Fig. 9 shows the practice for protection and planting of the face of slope N in the water side of river (or the waterside of lake or marsh), and the soil-protective material 100 used in this practice is constituted e.g. in the following manner by using the above net- or sheet-shaped material 103 (which may have plant seeds and fertilizers etc. as necessary adhering directly thereto, or may carry a surf material or a planting mat) and the plant fiber "a" and the string-shaped material 177, both of which contain the inorganic powder "b".

That is, the plant fiber "a" is rolled with the net- or sheet-shaped material 103 and then bound with the string-shaped material 177, or although not shown in the drawing, the net- or sheet-shaped material 103 is wound in a roll form and then bound with the string-shaped material 177, or a plurality of plant fibers "a" themselves are bundled with the string-shaped material 177, thus constituting the bar-shaped soil-protective material 100 with e.g. a diameter of 20 to 50 cm and a length of 4 to 5 m.

The bar-shaped soil-protective material 100 constituted above is arranged along the face of slope N in the waterside of river and simultaneously provided with e.g. stake 188 for anchoring, and if necessary, soil 199 is introduced into between the soil-protective material 100 and the face of slope N, to complete the protection and planting of the face of slope N in the waterside of river.

If plant seeds are to be carried on the soil-protective material 100, the seeds to be selected are preferably those of aquatic plants native to the site in question, and if soil 199 is introduced as necessary, stamps of reeds, sweet flags and cattails are preferably implanted once the soil-protective material 100 is stabilized.

By the practice described above, erosion of the surface-layer soil in the waterside of river can be effectively prevented, and by vegetation of aquatic plants on the soil-protective material 100 as the vegetation bed, the protection and planting of the face of slope N in the waterside of river can be achieved, and further the soil-protective material 100 corrects the acidity of soil on the face of slope, contributes to neutralization of acid rain, and improves the soil by attraction of useful microorganisms in the soil thus creating a soil environment suitable for growth of plants, as described above.

On the other hand, in the part of the soil-protective material 100 immersed in water, a habitat environment suitable for a wide variety of useful microorganisms necessary for improvement of water is formed by a thin layer of the inorganic powder "b" having a vast contact area with water and by virtue of the high affinity of the plant fiber "a" for the microorganisms.

Accordingly, as described in the results of the above water-improving test, the soil-protective material of the invention can also be expected to improve water thus attaining a significant effect of improving and maintaining the soil environment suitable for growth of plants as well as the environments of rivers, lakes and marshes.

When the plant fiber "a" was dipped in 0.1% Ca(OH)$_2$ solution for about 3 hours, then raised and dried, Ca(OH)$_2$ in an amount of 2 to 4 weight-% of the plant fiber was confirmed to be adsorbed and accumulated on the plant fiber surface having hollows "e".

Using the plant fiber "a" to which the inorganic powder "b" was introduced, the net- or sheet-shaped material 103 was formed and then formed into the bar-shaped soil-protective material 100, which was subsequently arranged on the face of slope N in the waterside of river. As a result, 80% or more COD and nitrogen could be removed, while 85% or more phosphorus could be removed.

As a result of investigation of such degrees of removal, it was confirmed that a habitat environment suitable for various animals and plants such as microorganisms and algae is formed on the surface of the plant fiber, where various microorganisms propagate, and thus it was concluded that the improvement of degrees of removal of COD, nitrogen and phosphorus is attributable not only to mere chemical bonding of $Ca(OH)_2$ but also to functions of microbial group.

For the practice for protection and planting of the face of slope N in the waterside of river, as shown in Fig. 10, a plurality of plant fibers "a" to which the inorganic powder "b" has been introduced are e.g. string-shaped so that they drift in water, then attached to the surface of the bar-shaped soil-protective material 100, and arranged on the face of slope N in the waterside of river, whereby the plant fiber "a" in water drifts and floats to raise the efficiency of contact with eutrophication materials in running water, thus improving the ability to improve water and further improving a habitant environment for small fries and microorganisms.

As described above, the water-improving material of the invention is composed partly or wholly of plant fiber having the function of attracting useful microorganisms, wherein at least one member selected as functional fine particles from natural or synthetic oxides, hydroxides, carbonates, composite oxides and composite carbonates thereof and organometallic compounds thereof, and based on either one or more of Ca, Mg, Al, Fe, Si and Ti as the main component, is carried on gaps possessed by the plant fiber, so that the surface of the plant fiber has various shapes thus permitting a habitat environment suitable for microorganisms to be formed on the surface of the plant fiber and simultaneously allowing the water-improving material to have a vast contact area with running water, and therefore the water-improving material of the present invention has the function of permitting a large amount of various microorganisms necessary for water improvement to be carried under a suitable habitat environment, thus bringing about not only a significantly higher ability to improve water by using useful microorganisms but also superiority in adsorption of SS (suspended substance).

Further, the plant fiber upon disposal by combustion after use does not cause pollution or may be left as such because it is biodegradable with time to diminish naturally in that site without causing pollution.

Further, the functional fine particles carried on the surface of the plant fiber have the ability to scavenge nitrogen and phosphorus as a source of nutrition enrichment, and thus the water-improving material according to the present invention is very suitable for lowering concentrations of phosphorus and nitrogen in running water.

In addition, various coupling agents can be bound to the functional fine particles described above to introduce a wide variety of organic functional groups onto the surface of the plant fiber, and these organic functional groups create a state in which microorganisms gather on the surface of the plant fiber, thus achieving a significant improvement in the ability of microorganisms to improve water.

Further, a layer of the functional fine particles with a vast surface area is formed on the surface of the plant fiber in the soil-protective material of this invention to neutralize acidic substances in the soil, thus efficiently correcting the acidity of soil on the face of slope, forming excellent vegetation even on the face of slope inferior in growth of plants, and contributing to neutralization of acidic substances.

Further, functional fine particles attract useful microorganisms in the soil to improve water, whereby plant growth can be promoted and a soil environment suitable for plant growth can be created as a whole to secure protection and planting of the face of slope N by vegetation.

When the soil-protective material constituted as described above is arranged e.g. on the face of slope N in the waterside of river, it is possible to achieve not only the effects described above, but also formation of habitat spaces for various plants and animals, removal of nitrogen and phosphorus as a source of nutrition enrichment or COD in running water, so that the soil-protective material can be expected to improve water thereby achieving a higher effect of improving and maintaining the soil environment suitable for growth of plants as well as the environment of rivers, and further the soil-protective material is based on plant fiber so that it will not remain as residues, and the functional fine particles are not a substance exerting a burden on the environment, thus permitting the natural environment to be kept well.

That is, according to the present invention, there is provided a soil-protective material having excellent functions for maintenance of the environment in addition to the function that it does not remain as residues.

[Table 1]

| Measuring results of water quality of treated water | | | | |
|---|---|---|---|---|
| | pH | degrees of removal of COD(%) | degrees of removal of nitrogen(%) | degrees of removal of phosphorus(%) |
| no carriers | 7.2 | 30 | 60 | < 1 |
| coconut fiber introduced nothing | 7.0 | 70 | 75 | 25 |
| coconut fiber introduced 3%Ca(OH)$_2$ | 7.7 | 90 | 90 | 50 |

[Table 2]

| sample fiber | coconut | coconut | coconut | coconut | coconut | coconut | coconut | coconut |
|---|---|---|---|---|---|---|---|---|
| inorganic powder | nothing | Ca(OH)₂ | Ca(OH)₂ | SiO₂ (colloidal silica) | SiO₂ (colloidal silica) | CaMg(CO₃)₂ | tetraethoxy silane | SiO₂ sparing (colloidal silica) |
| couping agent | nothing | nothing | X | Y | Z | X | Y | Y |
| pH | 7.5 | 7.9 | 7.8 | 7.5 | 7.5 | 7.8 | 7.5 | 7.5 |
| amount of deposit (mg/l) | 250 | 300 | 850 | 360 | 360 | 970 | 660 | 440 |
| concentration of phosphorus | 32 | 7 | 7 | 21 | 20 | 6 | 14 | 21 |
| concentration of nitorogen | 34 | 17 | 15 | 28 | 28 | 14 | 11 | 27 |
| COD(mg/l) | 29 | 22 | 26 | 25 | 24 | 22 | 26 | 22 |

X ··· isopropyltri(n-aminoethyl-aminoethyl)titanate

Y ··· N-phenyl-γ-aminopropyltrimethoxy silane

Z ··· N-β(aminoethyl)-γ-aminopropyltrimethoxy silane

**Claims**

1.  A functional plant fiber wherein functional fine particles having desired working effects are carried on gaps possessed by the plant fiber.

2.  A water-improving material composed partly or wholly of plant fiber having the function of attracting useful microorganisms, wherein at least one member selected from natural or synthetic oxides, hydroxides, carbonates, composite oxides thereof and composite carbonates thereof and organometallic compounds thereof which are based on either one or more of Ca, Mg, Al, Fe, Si and Ti as the main component, is carried on gaps possessed by the plant fiber.

3.  A soil-protective material composed partly or wholly of plant fiber having the function of neutralizing acidity, wherein at least one member selected from natural or synthetic oxides, hydroxides, carbonates, composite oxides thereof and composite carbonates thereof and organometallic compounds thereof which are based on either one or more of Ca, Mg, Al, Fe, Si and Ti as the main component, is carried on gaps possessed by the plant fiber.

4.  The soil-protective material according to claim 3, and further comprising that the soil-protective material is formed into a net or a mat or a roll.

F I G. 1

F I G. 2

F I G. 3

F I G. 4

F I G. 5

F I G. 6

FIG. 7

FIG. 8

# F I G. 9

# F I G. 10

**European Patent Office**

## EUROPEAN SEARCH REPORT

Application Number

EP 03 00 3675

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2000, no. 16, 8 May 2001 (2001-05-08) & JP 2001 017524 A (TOYO ROKI MFG CO LTD), 23 January 2001 (2001-01-23) * abstract * | 1-3 | D06M11/44 D06M11/45 D06M11/46 D06M11/49 D06M11/79 |
| X | PATENT ABSTRACTS OF JAPAN vol. 2000, no. 19, 5 June 2001 (2001-06-05) & JP 2001 047076 A (NISSHOKU CORP), 20 February 2001 (2001-02-20) * abstract * | 1-4 | |
| X | PATENT ABSTRACTS OF JAPAN vol. 2000, no. 26, 1 July 2002 (2002-07-01) & JP 2001 247867 A (EIKO KENSETSU KK), 14 September 2001 (2001-09-14) * abstract * | 1-3 | |
| X | EP 0 522 304 A (NEW JAPAN CHEM CO LTD ;SHIKIBO LTD (JP)) 13 January 1993 (1993-01-13) * claims * | 1-3 | **TECHNICAL FIELDS SEARCHED (Int.Cl.7)** D06M C02F |
| X | DE 40 09 662 A (ECCO GLEITTECHNIK GMBH) 2 October 1991 (1991-10-02) * page 1, line 30 - line 47; claims * | 1-3 | |

The present search report has been drawn up for all claims

| Place of search | Date of completion of the search | Examiner |
|---|---|---|
| MUNICH | 5 August 2003 | Koegler-Hoffmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 452 637 A1

## ANNEX TO THE EUROPEAN SEARCH REPORT
## ON EUROPEAN PATENT APPLICATION NO.

EP 03 00 3675

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2003

| Patent document cited in search report | | Publication date | Patent family member(s) | | Publication date |
|---|---|---|---|---|---|
| JP 2001017524 | A | 23-01-2001 | NONE | | |
| JP 2001047076 | A | 20-02-2001 | NONE | | |
| JP 2001247867 | A | 14-09-2001 | NONE | | |
| EP 0522304 | A | 13-01-1993 | JP | 3146262 B2 | 12-03-2001 |
| | | | JP | 4370270 A | 22-12-1992 |
| | | | DE | 69219821 D1 | 26-06-1997 |
| | | | DE | 69219821 T2 | 11-09-1997 |
| | | | EP | 0522304 A1 | 13-01-1993 |
| | | | US | 5427844 A | 27-06-1995 |
| DE 4009662 | A | 02-10-1991 | DE | 4009662 A1 | 02-10-1991 |
| | | | AT | 150101 T | 15-03-1997 |
| | | | CA | 2029891 A1 | 18-10-1990 |
| | | | DE | 9007726 U1 | 12-01-1995 |
| | | | DE | 9007773 U1 | 26-10-1995 |
| | | | DE | 59010668 D1 | 17-04-1997 |
| | | | DK | 422174 T3 | 22-09-1997 |
| | | | WO | 9012906 A2 | 01-11-1990 |
| | | | EP | 0422174 A1 | 17-04-1991 |
| | | | EP | 0735162 A2 | 02-10-1996 |
| | | | ES | 2101696 T3 | 16-07-1997 |
| | | | JP | 2909207 B2 | 23-06-1999 |
| | | | JP | 3505475 T | 28-11-1991 |
| | | | US | 5494748 A | 27-02-1996 |
| | | | US | 5232779 A | 03-08-1993 |

EPO FORM P0459

For more details about this annex : see Official Journal of the European Patent Office, No. 12/82

19